# EUROPÄISCHE PATENTSCHRIFT

(11) **EP 1 609 641 B1**
(45) Veröffentlichungstag und Bekanntmachung des Hinweises auf die Patenterteilung: **18.07.2007**
(21) Anmeldenummer: 05012312.4
(22) Anmeldetag: 08.06.2005
(51) Int. Cl.: B60H 1/03

(54) **Vorrichtung und Verfahren zur Klimatisierung eines Innenraums, insbesondere eines Fahrzeuginnenraums**
Apparatus and method for air conditioning of passenger compartments, especially vehicle passenger compartments.
Appareil et méthode de climatisation d'un habitacle, en particulier d'un habitacle de véhicule automobile.

(30) Priorität: 24.06.2004 DE 102004030681
(43) Veröffentlichungstag der Anmeldung: 28.12.2005
(73) Patentinhaber: Behr GmbH & Co. KG, 70469 Stuttgart (DE); J. Eberspächer GmbH & Co. KG, 73730 Esslingen (DE)
(72) Erfinder: Schäfer, Alfons, 73776 Altbach (DE); Elbert, Alfred, 71686 Remseck (DE); Schlecht, Patric, 73760 Ostfildern (DE)
(74) Vertreter: Liedtke, Klaus

(56) Entgegenhaltungen:
- DE-A1- 3 914 834
- DE-A1- 10 218 157
- DE-C1- 19 823 796

## Beschreibung

Die Erfindung betrifft eine Vorrichtung und ein Verfahren zur Klimatisierung eines Innenraums, insbesondere eines Fahrzeuginnenraums.

Eine derartige Vorrichtung zur Klimatisierung eines Innenraums wird insbesondere in einem Kraftfahrzeug eingesetzt. Die Vorrichtung zur Klimatisierung umfasst dabei üblicherweise ein Heiz- und/oder Klimagerät (auch kurz Klimaanlage oder HVAC-Anlage genannt, mit HVAC = heating, ventilation, air conditioning) mit einem Strömungskanal zur Konditionierung eines im Strömungskanal geführten Luftstroms. Zur Klimatisierung weist das Heiz- und/oder Klimagerät einen in einem Kältemittelkreislauf geschalteten Verdampfer und einen Wärmetauscher sowie gegebenenfalls eine Heizeinrichtung auf. Der Kältemittelfluss wird hierbei üblicherweise von einem in den Kältemittelkreislauf geschalteten Kompressor erzeugt, welcher unmittelbar vom Fahrzeugmotor angetrieben wird. Der Kältemittelfluss kommt somit zum Erliegen, sobald der Fahrzeugmotor abgeschaltet wird.

Für eine Vorklimatisierung im Fahrzeuginnenraum oder Erwärmung ohne laufenden Fahrzeugmotor ist im Allgemeinen eine Standheizung vorgesehen. Bei der Standheizung kann es sich beispielsweise um einen Brennstoff betriebenen Luft/Wasser-Wärmetauscher handeln, der zu einer programmierten Uhrzeit oder nach einem Signal, z. B. von einer Fernbedienung, mit von einer Brennkammer aufgeheizten Verbrennungsluft durchströmt wird, so dass das Wasser, insbesondere Kühlwasser eines Motors aufgewärmt wird. Das Kühlwasser durch den Motor und den Wärmetauscher der Standheizung wird nun fortlaufend umgewälzt. Zudem wird mittels eines üblichen Heizungswärmetauscher (= Wasser/Luft-Wärmetauscher) die Wärme im Motorkühlkreislauf auf die in den Fahrzeuginnenraum einströmende Luft übertragen, wobei die durch den Wärmetauscher geführte Luft, z. B. Frischluft oder Umluft, aufgewärmt und in den Fahrzeuginnenraum geführt wird. Häufig ist die Standheizung separat ausgebildet, so dass diese in einem Fahrzeug nachgerüstet werden kann. Bei Nutzfahrzeugen sind zumeist Luftheizungen eingebaut.

Aus der DE 102 18 157 A1 ist darüber hinaus ein Brennstoff betriebener Wärmeübertrager eines Brennheizgerätes bekannt. Um eine vergleichsweise kostengünstige und besonders raumsparende Standklimatisierung und/oder eine Zusatzheizung zu ermöglichen, ist der Wärmeübertrager zum Anordnen innerhalb der Klimabox angepasst.

Der Erfindung liegt die Aufgabe zugrunde, eine Vorrichtung und ein Verfahren zur Klimatisierung eines Innenraums anzugeben, welche sowohl im Stillstand als auch während der Fahrt eines Fahrzeugs eine hinreichend gute und einfache Klimatisierung des Innenraums ermöglichen.

Hinsichtlich der Vorrichtung wird die Aufgabe erfindungsgemäß gelöst durch die Merkmale des unabhängigen Anspruchs 1. Hinsichtlich des Verfahrens wird die Aufgabe erfindungsgemäß gelöst durch die Merkmale des unabhängigen Anspruchs 16. Vorteilhafte Weiterbildungen sind Gegenstand der Unteransprüche.

Die Erfindung geht dabei von der Überlegung aus, dass für eine hinreichend gute Klimatisierung eines Innenraums, z. B. eines Fahrzeuginnenraums, sowohl im Stillstand des Fahrzeugs, d.h. der Fahrzeugmotor ist ausgeschaltet, als auch während der Fahrt des Fahrzeugs eine möglichst gute Vorwärmung oder Aufheizung des Innenraums bei gleichzeitig guter Motorvorwärmung bzw. Motorkühlung ermöglicht sein sollte. Hierbei sollte der jeweilige Wunsch für eine entsprechende Vorheizung - Vorklimatisierung des Fahrzeuginnenraums und/oder Motorvorwärmung - berücksichtigt werden. Hierzu ist eine kombinierte Anordnung von zwei Wärmetauschern in einer Heiz- und/oder Klimaanlage vorgesehen, wodurch verschiedene Kühl- und Heizbetriebsarten sichergestellt werden. Insbesondere umfasst die Vorrichtung zur Klimatisierung des Innenraums ein Heiz- und/oder Klimagerät mit einem Strömungskanal für einen zu konditionierenden Luftstrom, wobei strömungseingangsseitig im Strömungskanal ein Verdampfer angeordnet ist und diesem im Strömungskanal ein erster Wärmetauscher und ein zweiter Wärmetauscher nachgeschaltet sind, wobei der erste Wärmetauscher als ein Brennstoff betriebener Luft/Luft-Wärmetauscher ausgebildet ist. Unter einem Luft/Luft-Wärmetauscher wird insbesondere ein Wärmetauscher verstanden, der im Wesentlichen Wärme von heißen Verbrennungsgasen auf den zu konditionierenden Luftstrom überträgt. Bevorzugt ist der zweite Wärmetauscher als ein Wasser/Luft-Wärmetauscher ausgebildet. Bei einem Wasser/Luft-Wärmetauscher wird beispielsweise die Wärme im Motorkühlkreislauf auf den zu konditionierenden Luftstrom übertragen. Zweckmäßigerweise ist hierzu der zweite Wärmetauscher im Kühlmittelkreislauf oder Motorkühlkreislauf eines Verbrennungsmotors angeordnet.

Durch eine derartige Kombination von zwei Wärmetauschern - einem"ersten, Brennstoff betriebenen Luft/Luft-Wärmetauscher und einem zweiten Wasser/Luft-Wärmetauscher - ist beispielsweise während eines Kaltstarts des Fahrzeugs und somit bei eingeschalteten Fahrzeugmotor eine Aufheizung und Klimatisierung des Innenraums bei gleichzeitiger Vorwärmung des Fahrzeugmotors ermöglicht. Bei einer gleichzeitigen Aufheizung von Innenraum und Motor sind jeweils die Wärmeströme geringer, so dass die jeweilige Aufheizung bzw. Vorwärmung entsprechend länger dauert. Zudem kann die Motorvorwärmung und Innenraumklimatisierung zeitgesteuert erfolgen. Auch kann im Stillstand des Fahrzeugs eine besonders schnelle Erwärmung des Innenraums bewirkt werde.

Je nach Vorgabe kann als Luftstrom Frischluft und/oder Umluft durch den Strömungskanal des Heiz- und/oder Klimageräts geführt werden. Hierzu ist vorteilhafterweise strömungseingangsseitig vor dem Verdampfer im Strömungskanal ein erstes Luftstromsteuerelement zur Zuführung von Frischluft und/oder Umluft angeordnet. Das erste Luftstromelement ist beispielsweise als eine Mischklappe oder Schwenkklappe ausgeführt.

Für eine individuelle Einstellung des Luftdurchsatzes am zweiten Wärmetauscher ist vorzugsweise zwischen dem ersten Wärmetauscher und dem zweiten Wärmetauscher ein zweites Luftstromsteuerelement angeordnet. Unter Luftdurchsatz wird hierbei das pro Zeiteinheit einen vorgegebenen Strömungsquerschnitt durchströmende Luftvolumen verstanden. Beispielsweise ist das zweite Luftstromsteuerelement zwischen einer ersten, den Strömungskanal in Richtung des zweiten Wärmetauschers verschließenden Endstellung und einer zweiten, den Strömungskanal in Richtung des zweiten Wärmetauschers freigebenden Endstellung sowie in eine beliebige Zwischenposition stellbar.

In einem ersten Betriebszustand (= Zuheizbetrieb, Fahrzeugmotor ist in Betrieb) ist zur Aufheizung des Luftstroms, d.h. der Frischluft und/oder der Umluft, diese durch den ersten Wärmetauscher und zumindest teilweise oder vollständig durch den zweiten Wärmetauscher führbar. Hierbei wird in Abhängigkeit von einer vorgegebenen Temperatur und einer daraus resultierenden Stellung des zweiten Luftstromsteuerelements der durch den ersten Wärmetauscher aufgewärmte Luftstrom (= Frischluft und/oder Umluft) zumindest teilweise durch den zweiten Wärmetauscher weiter aufgewärmt. Mit anderen Worten: Ist der Luftstrom noch nicht hinreichend aufgewärmt, so kann dieser zur weiteren Erwärmung indirekt zumindest teilweise über den zweiten Wärmetauscher in den Innenraum geführt werden, anderenfalls wird der Luftstrom direkt in den Innenraum geführt.

Zweckmäßigerweise ist das zweite Luftstromsteuerelement in Abhängigkeit von einer vorgegebenen Temperatur und/oder von einer vorgegebenen Zeit steuer- und/oder regelbar. Beispielsweise ist das zweite Luftstromsteuerelement in Abhängigkeit von der Innenraumtemperatur und/oder der Rücklauftemperatur im Kühlmittelkreislauf steuer- und/oder regelbar.

Zusätzlich kann in einem erweiterten Betriebsmodus bei eingeschaltetem Fahrzeugmotor, insbesondere bei einem Kaltstart beispielsweise für eine hinreichende Motorwärme der mittels des ersten Wärmetauschers aufgewärmte Luftstrom anhand des im Kühlmittelkreislauf angeordneten zweiten Wärmetauschers zur Motorvorwärmung genutzt werden. Dazu ist zweckmäßigerweise im Kühlmittelkreislauf eine herkömmliche vom Fahrzeugmotor angetriebene Wasserpumpe integriert, so dass die Wärmemenge des Luftstroms nach dem ersten Wärmetauscher an den nun zirkulierenden Kühlmittelkreislauf abgegeben wird und der aufgeheizte Luftstrom schnellstmöglich zur Aufheizung des Fahrzeuginnenraums genutzt wird. Alternativ kann bei ausgeschaltetem Fahrzeugmotor und bereits eingeschaltetem Standheizbetrieb eine im Kühlmittelkreislauf zusätzlich integrierte elektrische Wasserpumpe zur Aufwärmung des Kühlwassers des Fahrzeugmotors genutzt werden. Dabei wird die elektrische Wasserpumpe über das fahrzeugeigene Bordnetz versorgt. Zudem ist die elektrische Wasserpumpe zeitabhängig und/oder Temperatur abhängig steuerbar, Zusätzlich wird in diesem Betriebsmodus des Kaltstarts der Fahrzeuginnenraum nach bereits eingeschalteter Standheizung weiter aufgeheizt.

In einem zweiten Betriebszustand (= Standheizung, Fahrzeugmotor ist ausgeschaltet) ist der im ersten Wärmetauscher aufgeheizte Luftstrom direkt in den Innenraum führbar. Mit anderen Worten: Der aufgeheizte Luftstrom wird vollständig zur Vorklimatisierung des Innenraums verwendet, so dass eine möglichst schnelle Erwärmung sichergestellt ist.

Für eine individuelle Einstellung der verschiedenen Betriebsarten und - zuständen ist die Heizleistung des ersten Wärmetauschers in Abhängigkeit von einer vorgegebenen Temperatur, insbesondere der Rücklauftemperatur im Kühlmittelkreislauf und/oder in Abhängigkeit von der Innenraumtemperatur steuerbar. D.h. je nach Vorgabe- nur Vorwärmung des Innenraums (= Standheizung) oder kombinierte Vorwärmung des Innenraums und des Motors - wird nur die Innenraumtemperatur bzw. die Innenraumtemperatur und die Rücklauftemperatur zur Steuerung und/oder Regelung der Heizleistung des ersten Wärmetauschers und/oder des zweiten Wärmetauschers verwendet, indem das zweite Luftstromsteuerelement entsprechend in seiner Position verstellbar ist bzw. die Luftstrommenge, welche über ein dem Verdampfer vorgeschalteten Gebläse gefördert wird, einstellbar ist. Zur Einstellung einer weiteren Betriebsart ist vorzugsweise ein zusätzliches drittes Luftstromsteuerelement in Art einer Bypassklappe strömungsausgangsseitig des ersten Wärmetauschers angeordnet, wodurch der konditionierte Luftstrom am ersten Wärmetauscher vorbeigeführt wird und mittels der Stellung des zweiten Luftstromsteuerelement direkt und/oder indirekt dem Innenraum Zuführbar ist.

Zweckmäßigerweise ist das Heiz- und/oder Klimagerät mit dem Verdampfer und dem ersten Wärmetauscher sowie dem zweiten Wärmetauscher als eine integrierte Baueinheit (auch Klimaanlage mit integrierter Standheizung genannt) ausgebildet. Insbesondere sind diese in einem gemeinsamen Gehäuse angeordnet und somit als ein einziges Modul fertigbar und montierbar.

Hinsichtlich des Verfahrens zur Klimatisierung des Innenraums mit dem Heiz- und/oder Klimagerät mit dem Strömungskanal für einen zu konditionierenden Luftstrom wird dieser im Strömungskanal durch einen Verdampfer geführt und durch einen dem Verdampfer im Strömungskanal nachgeschalteten ersten Wärmetauscher, der als ein Brennstoff betriebener Luft/Luft-Wärmetauscher ausgebildet ist, aufgewärmt, wobei der Luftstrom anschließend direkt in den Innenraum und/oder indirekt zumindest teilweise durch einen zweiten, dem ersten Wärmetauscher nachgeschalteten Wärmetauscher in den Innenraum geführt wird. Dabei wird strömungseingangsseitig in den Strömungskanal als Luftstrom Umluft und/oder Frischluft mittels eines Gebläses gefördert.

Je nach Betriebszustand des Heiz- und/oder Klimageräts wird in einem ersten Betriebszustand (= Zuheizbetrieb) zur Aufheizung des Luftstroms dieser durch den ersten Wärmetauscher und zumindest teilweise oder vollständig durch den zweiten Wärmetauscher geführt. Alternativ kann in einem zweiten Betriebszustand (= Standheizung) der im ersten Wärmetauscher aufgeheizte Luftstrom direkt in den Innenraum geführt werden. In einer weiteren Betriebsart (= Kühlbetrieb) wird vorzugsweise der konditionierte Luftstrom am ersten Wärmetauscher vorbei geführt und anschließend zumindest teilweise oder vollständig dem zweiten Wärmetauscher zugeführt. Auch kann die konditionierte Luft auch am zweiten Wärmetauscher vorbei und direkt in den Innenraum geführt werden.

Für eine individuelle Klimatisierung des Innenraums und/oder Motorvorwärmung in Abhängigkeit vom Fahrzeugbetrieb wird die durch den zweiten Wärmetauscher zu führende Luftstrommenge in Abhängigkeit von der Innenraumtemperatur und/oder der Rücklauftemperatur im Kühlmittelkreislauf gesteuert. Auch kann eine im Kühlmittelkreislauf angeordnete elektrische Wasserpumpe zeitabhängig und/oder temperaturabhängig gesteuert werden. Des Weiteren kann die Heizleistung des ersten Wärmetauschers in Abhängigkeit von einer vorgegebenen Temperatur, insbesondere der Rücklauftemperatur im Kühlmittelkreislauf und/oder in Abhängigkeit von der Innenraumtemperatur gesteuert werden.

Die mit der Erfindung erzielten Vorteile bestehen insbesondere darin, dass mittels einer kombinierten Anordnung eines Brennstoff betriebenen, ersten Luft/Luft-Wärmetauschers und eines insbesondere im Kühlmittelkreislauf angeordneten zweiten Wärmetauschers sowohl im Fahrzeugstillstand als auch während der Fahrt des Fahrzeugs eine individuelle Klimatisierung des Innenraums bei gleichzeitig individueller Motorvorwärmung ermöglicht ist. So kann beispielsweise beim Kaltstart sowohl eine Motorvorwärmung als auch eine Klimatisierung des Fahrzeuginnenraums mittels einer elektrischen Wasserpumpe sichergestellt werden. Alternativ kann für eine schnelle Erwärmung des Fahrzeugsinnenraums die mittels des ersten Wärmetauschers, welcher als Standheizung fungiert, erwärmte Luft vollständig in den Innenraum geführt werden. Auch können bzw. kann in einer weiteren Ausführungsform die Motorvorwärmung und/oder die Vorklimatisierung des Fahrzeuginnenraums zeitgesteuert und/oder temperaturgesteuert erfolgen.

Ausführungsbeispiele der Erfindung werden anhand einer Zeichnung näher erläutert. Darin zeigen:
- FIG 1: schematisch eine Vorrichtung zur Klimatisierung eines Innenraums mit integrierter Standheizung, und
- FIG 2: im Querschnitt eine Vorrichtung zur Klimatisierung eines Innenraums mit integrierter Standheizung.

Einander entsprechende Teile sind in allen Figuren mit den gleichen Bezugszeichen versehen.

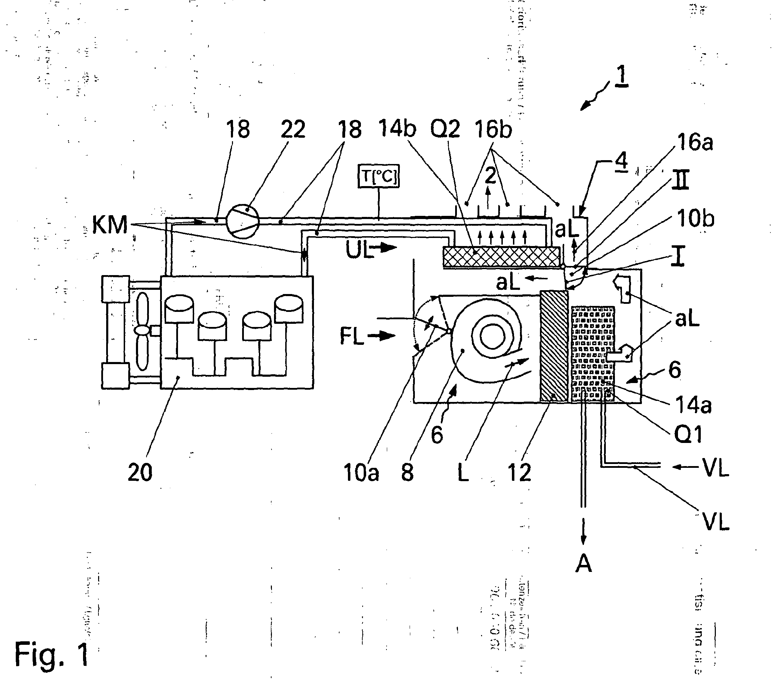

Figur 1 zeigt eine Vorrichtung 1 zur Klimatisierung eines Innenraums 2, z. B. eines Fahrzeuginnenraums. Die Vorrichtung 1 umfasst ein Heiz- und/oder Klimagerät 4 (auch HVAC-Modul genannt mit HVAC = heating ventilation air conditioning modul).

Das Heiz- und/oder Klimagerät 4 (im Weiteren kurz Klimaanlage 4 genannt) umfasst einen Strömungskanal 6 zur Führung eines zu konditionierenden Luftstroms L. Im Strömungskanal 6 ist strömungseingangsseitig ein Gebläse 8 zur Förderung des Luftstroms L angeordnet. Je nach Vorgabe kann mittels des Gebläses 8 durch entsprechende Stellung eines ersten Luftstromsteuerelements 10a als Luftstrom L Frischluft FL und/oder Umluft UL gefördert werden.

Anschließend wird der Luftstrom L im Strömungskanal 6 einem Verdampfer 12 zur Abkühlung der Luft gegenüber der Umgebungstemperatur zugeführt. Der abgekühlte Luftstrom L wird zumindest teilweise einem ersten Wärmetauscher 14a zugeführt, welcher einer ersten Temperierung des Luftstroms L dient.

Der erste Wärmetauscher 14a ist als ein mit Brennstoff betriebener Luft/Luft-Wärmetauscher ausgebildet. Dabei wird Verbrennungsluft VL einer nicht näher dargestellten Brennkammer zugeführt und dort verbrannt, wodurch der durch den ersten Wärmetauscher 14a geführte Luftstrom L indirekt über die heißen Abgase A der Brennkammer aufgeheizt wird. Der aufgeheizte Luftstrom aL wird im Strömungskanal 6 direkt über einen Luftaustritt 16a dem Innenraum 2 und/oder indirekt über einen zweiten Wärmetauscher 14b und danach angeordneten Luftaustritten 16b dem Innenraum 2 zur Klimatisierung zugeführt.

Zur Einstellung des anteiligen aufgeheizten Luftstroms aL über den zweiten Wärmetauscher 14b ist zwischen dem ersten Wärmetauscher 14a und dem zweiten Wärmetauscher 14b ein zweites Luftstromsteuerelement 10b angeordnet. Das Luftstromsteuerelement 10b ist beispielsweise als Mischklappe oder Schwenkklappe oder Temperatur-Mischklappe (Mischklappe mit temperaturabhängiger Steuerung) ausgeführt.

Der zweite Wärmetauscher 14b ist darüber hinaus im Kühlmittelkreislauf 18, einem Wasserkreislauf, des Fahrzeugmotors 20 angeordnet. Dabei wird ein Kühlmittel KM über eine Pumpe 22, z. B. eine elektrisch betriebene Wasserpumpe, im so genannten Wasserkreislauf-Rücklauf dem zweiten Wärmetauscher 14b, der als Wasser/Luft-Wärmetauscher ausgebildet ist, zugeführt und über den so genannten Wasserkreisläuf-Vorlauf dem Fahrzeugmotor 20 zur Vorwärmung des Fahrzeugmotors 20 wieder zugeführt. Durch entsprechende Einstellung der Pumpe 22 zirkuliert das Kühlmittel KM im Kühlmittelkreislauf 18.

Im Betrieb der Vorrichtung 1 zur Klimatisierung des Innenraums 2 sind durch die kombinierten Anordnung des ersten Wärmetauschers 14a und des zweiten Wärmetauschers 14b unter Zwischenschaltung des zweiten luftstromsteuerelements 10b verschiedene Heiz- und Kühlbetriebszustände einstellbar, die im folgenden näher beschrieben werden.

In einem ersten Betriebszustand, z. B. im Zuheizbetrieb zur Erwärmung des Fahrzeugmotors 20 und zur Klimatisierung des Innenraums 2, insbesondere im Kaltstart, wird der Luftstrom L durch den ersten Wärmetauscher 14a und zumindest teilweise oder vollständig durch den zweiten Wärmetauscher 14b geführt. Hierzu ist das zweite Luftstromsteuerelement 10b zwischen einer ersten, den Strömungskanal 6 in Richtung des zweiten Wärmetauschers 14b verschließenden Endstellung I und einer zweiten, den Strömungskanal in Richtung des zweiten Wärmetauschers 14b freigebenden Endstellung II oder in eine beliebige Zwischenposition stellbar. Im Detail wird im Aufheiz- oder Zuheizbetrieb Frischluft FL mittels des Gebläses 6 gefördert, welche eine erste Erwärmung durch den Brennstoff betriebenen ersten Wärmetauscher 14a mit einer zugehörigen, ersten Heizleistung Q1 erfährt.

Die aufgewärmte oder aufgeheizte Luft aL kann mittels des zweiten Luftstromsteuerelements 10b, z. B. einer Mischklappe, und in Abhängigkeit von einer Temperatur, z. B. Innenraumtemperatur oder Rücklauftemperatur im Kühlmittelkreislauf oder Temperatur der aufgeheizten Luft aL nach dem ersten Wärmetauscher 14a, durch den zweiten Wärmetauscher 14b, z. B. einen Wasser/Luft-Wärmetauscher oder -heizkörper, geleitet werden. Hierbei erfährt die aufgewärmte Luft aL eine weitere Erwärmung durch den zweiten Wärmetauscher 14b mit einer zugehörigen, zweiten Heizleistung Q2. Durch die schon im ersten Wärmetauscher 14a, anhand der ersten Heizleistung Q1 aufgewärmten Luft aL wird die Wärmeabgabecharakteristik des zweiten Wärmetauschers 14b und dessen Wärmeabgabe oder Heizleistung Q2 beeinflusst. Insbesondere verringert sich der Betrag der erforderlichen zweiten Heizleistung Q2 durch die bereits aufgewärmte Luft aL. Dieser Effekt wirkt sich vorteilhaft auf die Motorerwärmung aus, da die nicht abgeführte Wärmeenergie dem Fahrzeugmotor 20 zur Verfügung gestellt wird. Das bedeutet, beim Betreiben der Vorrichtung 1 mit eingeschalteter Standheizung und somit mit eingeschaltetem ersten Wärmetauscher 14a wird eine schnellere Motorerwärmung bei gleichgroßem oder sogar größerem Wärmeeintrag in den Innenraum 2 bewirkt. Durch Änderung der Stellung des zweiten Luftstromsteuerelements 10b in eine beliebige Zwischenstellung wird das Aufwärmverhalten des Innenraums 2 bzw. des Fahrzeugmotors 20 entsprechend beeinflusst. Des Weiteren ist es möglich, die jeweilige Heizleistung Q1 und/oder Q2 des ersten Wärmetauschers 14a bzw. des zweiten Wärmetauschers 14b in Abhängigkeit von der Rücklauftemperatur im Kühlmittelkreislauf 18 und/oder von der Innenraumtemperatur zu steuern bzw. zu regeln.

Alternativ kann bei vorher nicht eingeschalteter Standheizung bei einem Kaltstart für eine schnelle Aufheizung des Fahrzeuginnenraums die aufgewärmte Luft aL direkt und indirekt in den Innenraum 2 geführt werden. Die Motorerwärmung erfolgt in diesem Ausführungsbeispiel über die herkömmliche motoreigene oder motorbetriebene Umwälzpumpe (nicht näher dargestellt), die ebenfalls im Kältemittelkreislauf 18 integriert ist.

In einem zweiten Betriebszustand, z. B. Standheizung und somit bei ausgeschaltetem Fahrzeugmotor, wird mittels der Stellung des zweiten Luftstromsteuerelements 10b in der ersten Endstellung I die durch die Standheizung oder den ersten Wärmetauscher 14a aufgewärmte Luft aL direkt in den Innenraum 2 zur Innenraumheizung geführt. Durch die direkte Luftführung in den Innenraum 2 über den Luftaustritt 16a ist eine besonders schnelle Erwärmung des Innenraums 2 ermöglicht, da keine Verlustmasse erwärmt werden muss.

In einem weiteren Betriebszustand, z. B. Motorvorwärmung, wird im Kühlmittelkreislauf 18 die Pumpe 22, z. B. eine elektrische Wasserpumpe, betrieben. Das Gebläse 8 ist zur Förderung eines mittleren Luftstroms L auf eine mittlere Gebläsestufe gestellt. Das zweite Luftstromsteuerelement 10b ist in der Stellung II. Durch den nun zirkulierenden Kühlmittelstrom, insbesondere Wasserstrom, im Kühlmittelkreislauf 18 wird die Heizleistung Q1 des ersten Wärmetauschers 14a an den zweiten Wärmetauscher 14b in Form von Wärmeübertragung an das Kühlmittel KM des Kühlmittelkreislaufs 18 abgeführt. Die nicht abgeführte Restwärme wird zur Aufwärmung des Luftstroms aL genutzt, der anschließend über die Luftaustritte 16b in den Innenraum 2 geführt wird.

In weiteren Betriebszuständen, z. B. zeitgesteuerte Motorvorwärmung mit Kabinen- oder Innenraumheizung, oder temperaturgesteuerte Motorvorwärmung mit Innenraumheizung, wird die Pumpe 22 zeitabhängig gesteuert. Beispielsweise kann im Stillstand des Fahrzeugs eine gewünschte Abfahrtszeit über ein Bedienelement der Standheizung hinterlegt werden. Im Stillstand wird dann der Innenraum 2 fortlaufend oder zyklisch oder zeitgesteuert beheizt, ab einem bestimmten Zeitpunkt, z. B. 2 h vor Abfahrt, wird zusätzlich die Pumpe 22 in Betrieb genommen. In Abhängigkeit von der Innenraumtemperatur kann nun die erste Heizleistung Q1, die nicht für die Innenraumerwärmung benötigt wird, an das Kühlmittel KM des Kühlmittelkreislaufs 18 zur Motorvorwärmung genutzt werden. Hierzu wird die Brennerleistung der Brennkammer des ersten Wärmetauschers 14a auf maximale Leistung hochgefahren und gleichzeitig die Position des zweiten Luftstromsteuerelements 10b so gestellt, dass die Innenraumtemperatur nicht sinkt.

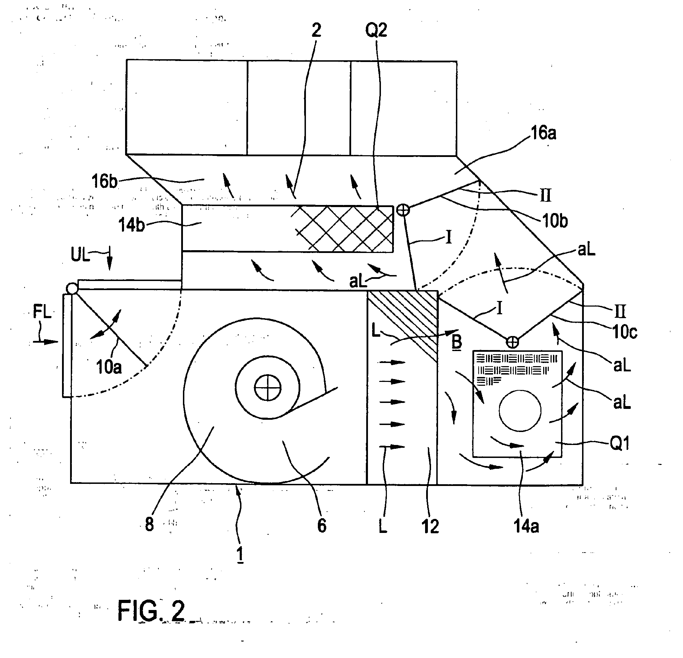

Figur 2 zeigt eine Vorrichtung 1 zur Klimatisierung eines Innenraums 2 als ein Fertigungsmodul mit integrierter Standheizung. Dabei wird mittels des Gebläses 8, z. B. einem Fahrzeuggebläse, Umluft UL oder Frischluft FL angesaugt und über den Strömungskanal 6 dem Verdampfer 12 zur Abkühlung des im Strömungskanal 6 geführten und zu konditionierenden Luftstroms L gegenüber der Umgebungstemperatur zugeführt. Nachfolgend kann ein daraus resultierender abgekühlter Luftstrom L dem ersten Wärmetauscher 14a zur Aufwärmung des abgekühlten Luftstroms L zugeführt. In dieser Betriebsart (= "AUF", Zuheizbetrieb) wird mittels des ersten Wärmetauschers 14a mit der ersten Heizleistung Q1 der abgekühlte Luftstrom L beim Durchströmen des ersten Wärmetauschers 14a indirekt über heiße Abgase A aufgeheizt.

Je nach vorgegebener Betriebsart und Einstellung der Klimatisierung des Innenraums 2 kann alternativ zur Betriebsart "Zuheizbetrieb" in einer weiteren Betriebsart "Kühlbetrieb" der konditionierte Luftstrom L in einem Bypass B am ersten Wärmetauscher 14a vorbei geführt werden. Hierzu ist strömungsausgangsseitig des ersten Wärmetauschers 14a ein zusätzliches drittes Luftstromsteuerelement 10c vorgesehen. Dabei ist das dritte Luftstromsteuerelement 10c, z. B. eine Schwenkklappe, als Bypass-Klappe ausgeführt, welche zwischen einer ersten Endstellung I (= Betriebsart "AUF", d.h. Zuheizbetrieb) und einer zweiten Endstellung II (= Betriebsart "ZU", d.h. Kühlbetrieb) schwenkbar ist. In der ersten Endstellung I wird die konditionierte Luft L sowohl vom ersten Wärmetauscher 14a (auch Abgas-Wärmetauscher genannt) als auch in Abhängigkeit von der Stellung des Weiteren nachfolgenden zweiten Luftstromsteuerelements 10b (= Temperaturmischklappe) vom zweiten Wärmetauscher 14b (auch Wasserheizkörper genannt) durchströmt und entsprechend aufgeheizt und anschließend dem Innenraum 2 zugeführt. In der zweiten Endstellung II wird die konditionierte Luft L am ersten Wärmetauscher 14a vorbeigeführt und wiederum in Abhängigkeit von der Stellung des zweiten Luftstromsteuerelements 10b direkt und/oder indirekt über den zweiten Wärmetauscher 14b dem Innenraum 2 zugeführt.

Das zweite Luftstromsteuerelement 10b ist wie oben beschrieben als Temperaturmischklappe ausgebildet, die in eine beliebige Position zwischen einer ersten Endstellung I (= Standheizbetrieb mit Aufwärmung der konditionierten Luft L durch den Abgas-Wärmetauscher 14a oder Kühlbetrieb mit Zuführung der konditionierten Luft L am Abgas-Wärmetauscher 14a vorbei) und einer zweiten Endstellung II (= Zuheizbetrieb mit Aufwärmung der konditionierten Luft L durch den Abgas-Wärmetauscher 14a und den Wasserheizkörper 14b) stellbar ist und somit der Mischung der unterschiedlich aufgeheizten Luft aL und/oder der konditionierten Luft L strömungseingangsseitig zum Innenraum 2 dient. Mit anderen Worten: Durch die Kombination des zweiten und dritten Luftstromsteuerelements 10b, 10c kann konditionierte Luft L oder aufgeheizte Luftstrom aL am Ausgang des ersten Wärmetauschers 14a direkt über den Luftaustritt 16a und/oder indirekt über den nachgeschalteten zweiten Wärmetauscher 14b und den Luftaustritten 16b dem Innenraum 2 zugeführt werden.

### Bezugszeichenliste

- 1: Vorrichtung zur Klimatisierung eines Innenraums
- 2: Innenraum, z. B. Fahrzeuginnenraum
- 4: Heiz- und/oder Klimagerät (auch Klimaanlage genannt)
- 6: Strömungskanal
- 8: Gebläse
- 10a: erstes Luftstromsteuerelement
- 10b: zweites Luftstromsteuerelement
- 10c: drittes Luftstromsteuerelement
- 12: Verdampfer
- 14a: erster Wärmetauscher
- 14b: zweiter Wärmetauscher
- 16a: Luftaustritt
- 16b: Luftaustritt
- 18: Kühlmittelkreislauf
- 20: Fahrzeugmotor
- 22: Pumpe

- A: Abgas
- aL: aufgeheizter Luftstrom
- B: Bypass
- FL: Frischluft
- KM: Kühlmittel
- L: Luftstrom
- UL: Umluft
- VL: Verbrennungsluft

## Patentansprüche

1. Vorrichtung (1) zur Klimatisierung eines Innenraums (2) mit einem Heiz- und/oder Klimagerät (4) mit einem Strömungskanal (6) für einen zu konditionierenden Luftstrom (L), wobei strömungseingangsseitig im Strömungskanal (6) ein Verdampfer (12) angeordnet ist und diesem im Strömungskanal (6) ein erster Wärmetauscher (14a) und ein zweiter Wärmetauscher (14b) nachgeschaltet sind, **dadurch gekennzeichnet, dass** der erste Wärmetauscher (14a) als ein Brennstoff betriebener Luft/Luft-Wärmetauscher ausgebildet ist und dass der zweite Wärmetauscher (14b) dem ersten Wärmetauscher (14a) nachgeschaltet ist.

2. Vorrichtung nach Anspruch 1, bei der der zweite Wärmetauscher (14b) als ein Wasser/Luft-Wärmetauscher ausgebildet ist.

3. Vorrichtung nach Anspruch 1 oder 2, bei der der zweite Wärmetauscher (14b) im Kühlmittelkreislauf (18) eines Fahrzeugsmotors (20) angeordnet ist.

4. Vorrichtung nach einem der Ansprüche 1 bis 3, bei der strömungseingangsseitig vor dem Verdampfer (12) im Strömungskanal (6) ein erstes Luftstromsteuerelement (10a) zur Zuführung des Luftstroms (L) angeordnet ist.

5. Vorrichtung nach einem der Ansprüche 1 bis 4, bei der zwischen dem ersten Wärmetauscher (14a) und dem zweiten Wärmetauscher (14b) ein zweites Luftstromsteuerelement (10b) angeordnet ist.

6. Vorrichtung nach Anspruch 5, bei der das zweite Luftstromsteuerelement (10b) zwischen einer ersten, den Strömungskanal (6) in Richtung des zweiten Wärmetauschers (14b) verschließenden Endstellung (I) und einer zweiten, den Strömungskanal (6) in Richtung des zweiten Wärmetauschers (14b) freigebenden Endstellung (II) oder in eine beliebige Zwischenposition stellbar ist.

7. Vorrichtung nach einem der Ansprüche 1 bis 6, bei der in einem ersten Betriebszustand zur Aufheizung des Luftstroms (L) dieser durch den ersten Wärmetauscher (14a) und zumindest teilweise oder vollständig durch den zweiten Wärmetauscher (14b) führbar ist.

8. Vorrichtung nach einem der Ansprüche 1 bis 6, bei der in einem zweiten Betriebszustand der im ersten Wärmetauscher (14a) aufgeheizte Luftstrom (L) direkt in den Innenraum (2) führbar ist.

9. Vorrichtung nach Anspruch 7 oder 8, bei der das zweite Luftstromsteuerelement (10b) in Abhängigkeit von einer vorgegebenen Temperatur und/oder von einer vorgegebenen Zeit steuerbar ist.

10. Vorrichtung nach Anspruch 9, bei der das zweite Luftstromsteuerelement (10b) in Abhängigkeit von der Innenraumtemperatur und/oder der Rücklauftemperatur im Kühlmittelkreislauf (18) steuerbar ist.

11. Vorrichtung nach einem der Ansprüche 5 bis 10, bei der in Abhängigkeit von einer vorgegebenen Temperatur und einer daraus resultierenden Stellung des zweiten Luftstromsteuerelements (10b) der durch den ersten Wärmetauscher (14a) aufgewärmte Luftstrom (aL) zumindest teilweise durch den zweiten Wärmetauscher (14b) weiter aufgewärmt wird.

12. Vorrrichtung nach einem der Ansprüche 1 bis 11, bei der strömungsausgangsseitig des ersten Wärmetauschers (14a) ein drittes Luftstromsteuerelement (10c) als Bypassklappe zum Zuführen eines konditionierten Luftstroms (L) am ersten Wärmetauscher (14a) vorbei direkt und/oder indirekt in den Innenraum (2) vorgesehen ist.

13. Vorrichtung nach einem der Ansprüche 1 bis 12, bei der der mittels des ersten Wärmetauschers (14a) aufgewärmte Luftstrom (aL) anhand des im Kühlmittelkreislauf (18) angeordneten zweiten Wärmetauschers (14b) zur Motorvorwärmung nutzbar ist.

14. Vorrichtung nach einem der Ansprüche 1 bis 13, bei der im Kühlmittelkreislauf (18) eine Pumpe (22) integriert ist, die zeitabhängig und/oder temperaturabhängig steuerbar ist.

15. Vorrichtung nach einem der Ansprüche 1 bis 14, bei der die Heizleistung (Q1) des ersten Wärmetauschers (14a) in Abhängigkeit von einer vorgegebenen Temperatur, insbesondere der Rücklauftemperatur im Kühlmittelkreislauf (18) und/oder in Abhängigkeit von der Innenraumtemperatur steuerbar ist.

16. Vorrichtung nach einem der Ansprüche 1 bis 15, bei der das Heiz- und/oder Klimagerät (4) mit dem Verdampfer (12) und dem ersten Wärmetauscher (14a) sowie dem zweiten Wärmetauscher (14b) als eine integrierte Baueinheit ausgebildet ist.

17. Verfahren zur Klimatisierung eines Innenraums (2) mit einem Heiz- und/oder Klimagerät (4) mit einem Strömungskanal (6) für einen zu konditionierenden Luftstrom (L), wobei der Luftstrom (L) im Strömungskanal (6) durch einen Verdampfer (12) geführt wird und durch einen dem Verdampfer (12) im Strömungskanal (6) nachgeschalteten ersten Wärmetauscher (14a), der als ein Brennstoff betriebener Luft/Luft-Wärmetauscher ausgebildet ist, aufgewärmt wird und anschließend direkt in den Innenraum (2) und/oder indirekt zumindest teilweise durch einen zweiten, dem ersten Wärmetauscher (14a) nachgeschalteten Wärmetauscher (14b) in den Innenraum (2) geführt wird.

18. Verfahren nach Anspruch 17, bei dem strömungseingangsseitig in den Strömungskanal (6) als Luftstrom (L) Umluft (UL) und/oder Frischluft (FL) mittels eines Gebläses (8) gefördert wird.

19. Verfahren nach Anspruch 17 oder 18, bei dem in einem ersten Betriebszustand zur Aufheizung des Luftstroms (L) dieser durch den ersten Wärmetauscher (14a) und zumindest teilweise oder vollständig durch den zweiten Wärmetauscher (14b) geführt wird.

20. Verfahren nach einem der Ansprüche 17 bis 19, bei dem die durch den zweiten Wärmetauscher (14b) zu führende Luftstrommenge in Abhängigkeit von einer vorgegebenen Temperatur und/oder von einer vorgegebenen Zeit gesteuert wird.

21. Verfahren nach einem der Ansprüche 17 bis 20, bei dem die durch den zweiten Wärmetauscher (14b) zu führende Luftstrommenge in Abhängigkeit von der Innenraumtemperatur und/oder der Rücklauftemperatur im Kühlmittelkreislauf (18) gesteuert wird.

22. Verfahren nach einem der Ansprüche 17 bis 21, bei dem der mittels des ersten Wärmetauschers (14a) aufgewärmte Luftstrom (aL) anhand des im Kühlmittelkreislauf (18) angeordneten zweiten Wärmetauschers (14b) zur Motorvorwärmung verwendet wird.

23. Verfahren nach einem der Ansprüche 17 bis 22, bei dem eine im Kühlmittelkreislauf (18) angeordnete Pumpe (22) zeitabhängig und/oder temperaturabhängig gesteuert wird.

24. Verfahren nach einem der Ansprüche 17 bis 23, bei dem in einem zweiten Betriebszustand der im ersten Wärmetauscher (14a) aufgeheizte Luftstrom (aL) direkt in den Innenraum (2) geführt wird.

25. Verfahren nach einem der Ansprüche 17 bis 24, bei dem die Heizleistung (Q1) des ersten Wärmetauschers (14a) in Abhängigkeit von einer vorgegebenen Temperatur, insbesondere der Rücklauftemperatur im Kühlmittelkreislauf und/oder in Abhängigkeit von der Innenraumtemperatur gesteuert wird.

26. Verfahren nach einem der Ansprüche 17 bis 25, bei dem der konditionierte Luftstrom (L) am ersten Wärmetauscher (14a) in einem Bypass (B) vorbeigeführt wird.

## Claims

1. A device (1) for climate control of an interior space (2), comprising a heating and/or air-conditioning device (4) including a flow channel (6) for an air current (L) that is to be conditioned, wherein an evaporator (12) is disposed in the flow channel (6) at an inlet side and wherein a first heat exchanger (14a) and a second heat exchanger (14b) are disposed in the flow channel (6) downstream from the evaporator (12), **characterized in that** the first heat exchanger (14a) is configured as a fuel-powered air-air heat exchanger and the second heat exchanger (14b) is disposed downstream from the first heat exchanger (14a).

2. The device according to claim 1, wherein the second heat exchanger (14b) is configured as a water-air heat exchanger.

3. The device according to one of the claims 1 or 2, wherein the second heat exchanger (14b) is disposed in a coolant circulation system (18) of a vehicle engine (20).

4. The device according to one of the claims 1 to 3, wherein a first air current regulator (10a) is disposed at the inlet side in the flow channel (6) upstream from the evaporator (12) so as to enable the air current (L) to be fed in.

5. The device according to one of the claims 1 to 4, wherein a second air current regulator (10b) is disposed between the first heat exchanger (14a) and the second heat exchanger (14b).

6. The device according to claim 5, wherein the second air current regulator (10b) is adjustable between a first end position (I) that closes the flow channel (6) in a direction of the second heat exchanger (14b), and a second end position (II) that opens the flow channel (6) in a direction of the second heat exchanger (14b), as well as to an arbitrary intermediate position.

7. The device according to of the claims 1 to 6, wherein, in a first operating state, the air current (L) is passed through the first heat exchanger (14a) and at least partially or totally through the second heat exchanger (14b) so as to heat the air current (L).

8. The device according to one of the claims 1 to 6, wherein, in a second mode of operation, the air current (L) heated by the first heat exchanger (14a) is fed directly into the interior space (2).

9. The device according to one of the claims 7 ur 8, wherein the second air current regulator (10b) is controllable as a function of a prescribed temperature and/or a prescribed time.

10. The device according to claim 9, wherein the second air current regulator (10b) is controllable as a function of the interior temperature and/or the return temperature in the coolant circulation system (18).

11. The device according to one of the claims 5 to 10, wherein the air current (aL) heated by the first heat exchanger (14a) is at least partially additionally heated by the second heat exchanger (14b) as a function of the prescribed temperature and a resultant position of the second air current regulator (14b).

12. The device according to one of the claims 1 to 11, wherein a third air current regulator (10c) is disposed on an outlet side of the first heat exchanger (14a) as a bypass flap for feeding a conditioned air current (L) past the first heat exchanger (14a) directly and/or indirectly into the interior space (2).

13. The device according to one of the claims 1 to 12, wherein the air current (aL) heated by the first heat exchanger (14a) is usable for pre-warming the engine using the second heat exchanger (14b) disposed in the coolant circulation system (18).

14. The device according to one of the claims 1 to 13, wherein a pump (22), controllable as a function of time and/or temperature, is integrated into the coolant circulation system (18).

15. The device according to one of the claims 1 to 14, wherein the heating output (Q1) of the first heat exchanger (14a) is controllable as a function of a prescribed temperature, particularly the return temperature in the coolant circulation system (18) and/or an interior temperature.

16. The device according to one of the claims 1 to 15, wherein the heating and/or air-conditioning device (4), the evaporator (12), the first heat exchanger (14a) and the second heat exchanger (14b) are integrated in a modular unit.

17. A method for climate control of an interior space (2) by means of a heating and/or air-conditioning device (4) fitted with a flow channel (6) for an air current (L) to be conditioned, wherein the air current (L) is fed through an evaporator (12) disposed in the flow channel (6) and wherein the air current (L) is heated using a first heat exchanger (14a) configured as a fuel-operated air-air heat exchanger and disposed downstream from the evaporator (12) in the flow channel (6) and wherein the air current (L) is subsequently led into the interior space (2) directly and/or indirectly at least partially through a second heat exchanger (14b) disposed downstream from the first heat exchanger (14a).

18. The method according to claim 17, wherein the air current (L) to be conditioned includes circulated air and/or fresh air, and wherein the air current (L) is fed into the flow channel (6) at the inlet side using a fan (8).

19. The method according to one of the claims 17 or 18, wherein the air current (L) is fed through the first heat exchanger (14a) and at least partially or totally through a second heat exchanger (14b) so as to heat up the air current (L) in a first operating state.

20. The method according to one of the claims 17 to 19, wherein the volume of the air current (L) to be fed through the second heat exchanger (14b) is regulated as a function of a prescribed temperature and/or a prescribed time.

21. The method according to one of the claims 17 to 20, wherein the volume of the air current (L) to be fed through the second heat exchanger (14b) is regulated as a function of a temperature of the interior and/or a return temperature in the coolant circulation system (18).

22. The method according to one of the claims 17 to 21, wherein the air current (aL) heated by the first heat exchanger (14a) is used to pre-warm an engine using the second heat exchanger (14b) disposed in the coolant circulation system (18).

23. The method according to one of the claims 17 to 22, wherein a pump (22) disposed in the coolant circulation system (18) is controlled as a function of a time and/or a temperature.

24. The method according to one of the claims 17 to 23, wherein the air current (aL) heated by the first heat exchanger (14a) is fed directly into the interior space (2) in a second operating state.

25. The method according to one of the claims 17 to 24, wherein the heating output (Q1) of the first heat exchanger (14a) is controlled as a function of a prescribed temperature, particularly the return temperature in the coolant circulation system and/or as a function of the interior temperature.

26. The method according to one of the claims 17 to 25, wherein the conditioned air current (L) is led around the first heat exchanger (14a) using a bypass (B).

## Revendications

1. Dispositif (1) pour la climatisation d'un habitacle (2), comprenant un appareil de chauffage et /ou climatiseur (4) avec un canal d'écoulement (6) pour un flux d'air à conditionner (L), un évaporateur (12) étant disposé dans le canal d'écoulement (6) côté admission, un premier échangeur de chaleur (14a) et un deuxième échangeur de chaleur (14b) étant disposés dans le canal d'écoulement (6) en aval de l'évaporateur, **caractérisé en ce que** le premier échangeur de chaleur (14a) est réalisé comme un échangeur de chaleur air/air fonctionnant avec un combustible, et **en ce que** le deuxième échangeur de chaleur (14b) est monté en aval du premier échangeur de chaleur (14a).

2. Dispositif selon la revendication 1, où le deuxième échangeur de chaleur (14b) est réalisé comme un échangeur de chaleur eau/air.

3. Dispositif selon la revendication 1 ou la revendication 2, où le deuxième échangeur de chaleur (14b) est disposé sur le circuit de réfrigérant (18) d'un moteur de véhicule (20).

4. Dispositif selon l'une des revendications 1 à 3, où un premier élément de commande de flux d'air (10a) pour l'amenée du flux d'air (L) est disposé devant l'évaporateur (12) dans le canal d'écoulement (6) côté admission.

5. Dispositif selon l'une des revendications 1 à 4, où un deuxième élément de commande de flux d'air (10b) est disposé entre le premier échangeur de chaleur (14a) et le deuxième échangeur de chaleur (14b).

6. Dispositif selon la revendication 5, où le deuxième élément de commande de flux d'air (10b) est réglable entre une première position finale (I) fermant le canal d'écoulement (6) dans la direction du deuxième échangeur de chaleur (14b) et une deuxième position finale (II) ouvrant le canal d'écoulement (6) dans la direction du deuxième échangeur de chaleur (14b), ou dans une position intermédiaire quelconque.

7. Dispositif selon l'une des revendications 1 à 6, où, dans un premier état de service pour le chauffage du flux d'air (L), celui-ci peut être conduit par le premier échangeur de chaleur (14a) et au moins partiellement ou totalement par le deuxième échangeur de chaleur (14b).

8. Dispositif selon l'une des revendications 1 à 6, où, dans un deuxième état de service, flux d'air (L) chauffé dans le premier échangeur de chaleur (14a) peut être directement conduit vers l'habitacle (2).

9. Dispositif selon la revendication 7 ou la revendication 8, où le deuxième élément de commande de flux d'air (10b) peut être activé en fonction d'une température définie et/ou d'un temps défini.

10. Dispositif selon la revendication 9, où le deuxième élément de commande de flux d'air (10b) peut être activé en fonction de la température de l'habitacle et/ou de la température de retour du circuit de réfrigérant (18).

11. Dispositif selon l'une des revendications 5 à 10, où, en fonction d'une température définie et d'une position résultante du deuxième élément de commande de flux d'air (10b), le flux d'air (aL) chauffé par le premier échangeur de chaleur (14a) est au moins partiellement continué à être chauffé par le deuxième échangeur de chaleur (14b).

12. Dispositif selon l'une des revendications 1 à 11, où, côté sortie du premier échangeur de chaleur (14a), un troisième élément de commande de flux d'air (10c) est prévu comme clapet de dérivation pour la conduction directe et/ou indirecte vers l'habitacle (2) d'un flux d'air conditionné (L) en passant par le premier échangeur de chaleur (14a).

13. Dispositif selon l'une des revendications 1 à 12, où le flux d'air chauffé (aL) au moyen du premier échangeur de chaleur (14a) est utilisable pour l'échauffement du moteur à partir du deuxième échangeur de chaleur (14b) disposé sur le circuit de réfrigérant (18).

14. Dispositif selon l'une des revendications 1 à 13, où une pompe (22) est intégrée au circuit de réfrigérant (18), laquelle peut être activée en fonction du temps et/ou de la température.

15. Dispositif selon l'une des revendications 1 à 14, où la puissance de chauffe (Q1) du premier échangeur de chaleur (14a) est activable en fonction d'une température définie, en particulier en fonction de la température de retour du circuit de réfrigérant (18) et/ou de la température de l'habitacle.

16. Dispositif selon l'une des revendications 1 à 15, où l'appareil de chauffage et /ou climatiseur (4) est réalisé comme unité de construction intégrée avec l'évaporateur (12) et le premier échangeur de chaleur (14a) ainsi que le deuxième échangeur de chaleur (14b).

17. Procédé de climatisation d'un habitacle (2) au moyen d'un appareil de chauffage et /ou climatiseur (4) avec un canal d'écoulement (6) pour un flux d'air à conditionner (L), ledit flux d'air (L) étant conduit dans le canal d'écoulement (6) via un évaporateur (12) et chauffé via un premier échangeur de chaleur (14a) disposé en aval de l'évaporateur (12) dans le canal d'écoulement (6), réalisé comme un échangeur de chaleur air/air fonctionnant avec un combustible, avant d'être directement et/ou indirectement conduit vers l'habitacle (2) au moins partiellement au moyen d'un deuxième échangeur de chaleur (14b) monté en aval du premier échangeur de chaleur (14b).

18. Procédé selon la revendication 17, où de l'air de recirculation (UL) et/ou de l'air frais (FL) est refoulé comme flux d'air (L) par un ventilateur (8) dans le canal d'écoulement (6) côté admission.

19. Procédé selon la revendication 17 ou la revendication 18, où, dans un premier état de service pour le chauffage du flux d'air (L), celui-ci est conduit par le premier échangeur de chaleur (14a) et au moins partiellement ou totalement par le deuxième échangeur de chaleur (14b).

20. Procédé selon l'une des revendications 17 à 19, où le débit d'air à refouler par le deuxième échangeur de chaleur (14b) est commandé en fonction d'une température définie et/ou d'un temps défini.

21. Procédé selon l'une des revendications 17 à 20, où le débit d'air à refouler par le deuxième échangeur de chaleur (14b) est commandé en fonction de la température de l'habitacle et/ou de la température de retour du circuit de réfrigérant (18).

22. Procédé selon l'une des revendications 17 à 21, où le flux d'air chauffé (aL) au moyen du premier échangeur de chaleur (14a) est utilisé pour l'échauffement du moteur à partir du deuxième échangeur de chaleur (14b) disposé sur le circuit de réfrigérant (18).

23. Procédé selon l'une des revendications 17 à 22, où une pompe (22) disposée dans le circuit de réfrigérant (18) est activée en fonction du temps et/ou de la température.

24. Procédé selon l'une des revendications 17 à 23, où le flux d'air (aL) chauffé dans le premier échangeur de chaleur (14a) pendant un deuxième état de service, est directement conduit vers l'habitacle (2).

25. Procédé selon l'une des revendications 17 à 24, où la puissance de chauffe (Q1) du premier échangeur de chaleur (14a) est activée en fonction d'une température définie, en particulier en fonction de la température de retour du circuit de réfrigérant et/ou de la température de l'habitacle.

26. Procédé selon l'une des revendications 17 à 25, où le flux d'air conditionné (L) passe par le premier échangeur de chaleur (14a) vers un clapet de dérivation (B).
